# EUROPEAN PATENT SPECIFICATION

(11) **EP 2 983 445 B1**
(45) Date of publication and mention of the grant of the patent: **11.10.2017**
(21) Application number: 15179894.9
(22) Date of filing: 05.08.2015
(51) Int. Cl.: H04W 76/06, H04W 76/04, H04W 76/02

(54) **METHOD AND APPARATUS FOR NOTIFYING OF SERVICE RELEASE FOR DUAL CONNECTIVITY IN WIRELESS COMMUNICATION SYSTEM**
VERFAHREN UND VORRICHTUNG ZUR BENACHRICHTIGUNG VON DIENSTFREIGABEN FÜR DUALE VERBINDUNG IN EINEM DRAHTLOSEN KOMMUNIKATIONSSYSTEM
PROCÉDÉ ET APPAREIL DESTINÉS À NOTIFIER UNE LIBÉRATION DE SERVICE DE CONNECTIVITÉ DOUBLE DANS UN SYSTÈME DE COMMUNICATION SANS FIL

(30) Priority: 08.08.2014 US 201462034791 P
(43) Date of publication of application: 10.02.2016
(60) Divisional application: 17181943.6
(73) Proprietor: LG Electronics Inc., Yeongdeungpo-gu Seoul 150-721 (KR)
(72) Inventor: XU, Jian, 137-893 SEOUL (KR); LEE, Youngdae, 137-893 SEOUL (KR); BYUN, Daewook, 137-893 SEOUL (KR)
(74) Representative: Cabinet Plasseraud

(56) References cited:
- US-A1- 2012 040 677
- HUAWEI: "TP on DC Mobility Procedures", 3GPP DRAFT; R3-140565 TP FOR DC PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Jose del Cabo, Mexico; 20140331 - 20140404 30 March 2014 (2014-03-30), XP050795260, Retrieved from the Internet: URL:http://www.3gpp.org/ftp/Meetings_3GPP_ SYNC/RAN3/Docs/ [retrieved on 2014-03-30]
- ZTE: "Stage 2 X2-CP procedures and data forwarding", 3GPP DRAFT; R3-140740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Jose Del Cabo, Mexico; 20140331 - 20140404 30 March 2014 (2014-03-30), XP050795431, Retrieved from the Internet: URL:http://www.3gpp.org/ftp/Meetings_3GPP_ SYNC/RAN3/Docs/ [retrieved on 2014-03-30]
- ERICSSON: "Introduction of Dual Connectivity", 3GPP DRAFT; R3-141525, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Seoul, Korea; 20140519 - 20140523 1 July 2014 (2014-07-01), XP050821598, Retrieved from the Internet: URL:http://www.3gpp.org/ftp/tsg_ran/WG3_Iu /TSGR3_84/Docs/ [retrieved on 2014-07-01]
- NSN ET AL: "SeNB Failure Reporting", 3GPP DRAFT; R2-142310 DUCO FAILURE REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, Korea; 20140519 - 20140523 18 May 2014 (2014-05-18), XP050793482, Retrieved from the Internet: URL:http://www.3gpp.org/ftp/Meetings_3GPP_ SYNC/RAN2/Docs/ [retrieved on 2014-05-18]

## Description

### BACKGROUND OF THE INVENTION

### Field of the Invention

The present invention relates to wireless communications, and more particularly, to a method and apparatus for notifying a radio resource control (RRC) connection error and service release for dual connectivity in a wireless communication system.

### Related Art

Universal mobile telecommunications system (UMTS) is a 3rd generation (3G) asynchronous mobile communication system operating in wideband code division multiple access (WCDMA) based on European systems, global system for mobile communications (GSM) and general packet radio services (GPRS). The long-term evolution (LTE) of UMTS is under discussion by the 3rd generation partnership project (3GPP) that standardized UMTS.

The 3GPP LTE is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Small cells using low power nodes are considered promising to cope with mobile traffic explosion, especially for hotspot deployments in indoor and outdoor scenarios. A low-power node generally means a node whose transmission power is lower than macro node and base station (BS) classes, for example pico and femto evolved NodeB (eNB) are both applicable. Small cell enhancements for evolved UMTS terrestrial radio access (E-UTRA) and evolved UMTS terrestrial radio access network (E-UTRAN) will focus on additional functionalities for enhanced performance in hotspot areas for indoor and outdoor using low power nodes.

One of potential solutions for small cell enhancement, dual connectivity has been discussed. Dual connectivity is used to refer to operation where a given UE consumes radio resources provided by at least two different network points connected with non-ideal backhaul. Furthermore, each eNB involved in dual connectivity for a UE may assume different roles. Those roles do not necessarily depend on the eNB's power class and can vary among UEs. Dual connectivity may be one of potential solutions for small cell enhancement.

A secondary eNB (SeNB) may be added or modified for dual connectivity. But in some situations, a SeNB cannot be added or modified, due to e.g. capability of UE or wrong radio resource control (RRC) configuration of the SeNB. In this case, a cause indicating that the SeNB cannot be added or modified needs to be forwarded from the UE to the SeNB.

Document 3GPP TSG RAN WG3 Meeting #83bis; R3-140565; April, 2014; TP on DC Mobility Procedures discloses a way to identify the basic signalling to support the dual connectivity.

### SUMMARY OF THE INVENTION

The invention is defined by the subject-matter of the independent claims. Particular embodiments of the invention are set out in the dependent claims.

Exemplary embodiments provide a method and apparatus for notifying a radio resource control (RRC) connection error and service release for dual connectivity in a wireless communication system. Further exemplary embodiments provide a method and apparatus for transmitting a secondary evolved NodeB (SeNB) release request message with a cause.

In an aspect, a method for transmitting, by a master evolved NodeB (MeNB), a secondary eNB (SeNB) release request message in a wireless communication system is provided. The method includes receiving a message including a cause, which indicates that a user equipment (UE) has not successfully applied a secondary cell group (SCG) configuration, from the UE, and transmitting the SeNB Release Request message including the cause to a SeNB.

The cause may be included in the SeNB Release Request message via a cause information element (IE).

The cause may be one of "Radio Connection With UE Lost" or "Failure in the Radio Interface Procedure".

The SeNB Release Request message may include a data forwarding address for SCG bearer option or split bearer option.

The data forwarding address may include E-UTRAN radio access bearer identifier (E-RAB ID).

The data forwarding address may include downlink/uplink (DL/UL) forwarding GPRS tunneling protocol (GTP) tunnel endpoint.

The SeNB Release Request message may indicate releasing all of SCG bearers or split bearers.

The method may further include deciding to release all of SCG bearers or split bearers.

The message may be one of a radio resource control (RRC) connection reestablishment request message or a RRC connection reconfiguration complete message.

The method may further include receiving a SeNB Release Request Acknowledge message with information on a protocol data unit (PDU) delivery status from the SeNB.

The method may further include receiving a sequence number (SN) Status Transfer message from the SeNB.

The method may further include receiving data forwarded from the SeNB.

The method may further include performing a path update procedure to a mobility management entity (MME).

The method may further include transmitting a UE Context Release message to the SeNB.

In another aspect, a master evolved NodeB (MeNB) includes a memory, a transceiver, and a processor coupled to the memory and the transceiver, and configured to control the transceiver to receive a message including a cause, which indicates that a user equipment (UE) has not successfully applied a secondary cell group (SCG) configuration, from the UE, and control the transceiver to transmit a secondary eNB (SeNB) Release Request message including the cause to a SeNB.

According to an embodiment of the present invention, a cause indicating that the SeNB cannot be added or modified can be forwarded from the UE to the SeNB, signaling waste can be reduced.

### BRIEF DESCRIPTION OF THE DRAWINGS

FIG. 1 shows LTE system architecture.
FIG. 2 shows a block diagram of architecture of a typical E-UTRAN and a typical EPC.
FIG. 3 shows a block diagram of a user plane protocol stack of an LTE system.
FIG. 4 shows a block diagram of a control plane protocol stack of an LTE system.
FIG. 5 shows an example of a physical channel structure.
FIG. 6 shows radio protocol architecture for dual connectivity.
FIG. 7 shows C-plane connectivity of eNBs involved in dual connectivity for a certain UE.
FIG. 8 shows U-plane connectivity of eNBs involved in dual connectivity for a certain UE.
FIG. 9 shows an example of U-plane architecture for dual connectivity.
FIG. 10 shows another example of U-plane architecture for dual connectivity.
FIG. 11 shows an example of a conventional SeNB modification procedure.
FIG. 12 shows an example of a SeNB modification procedure according to an embodiment of the present invention.
FIG. 13 shows an example of a SeNB addition procedure according to an embodiment of the present invention.
FIG. 14 shows an example of a method for transmitting a SeNB Release Request message according to an embodiment of the present invention.
FIG. 15 shows a wireless communication system to implement an embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

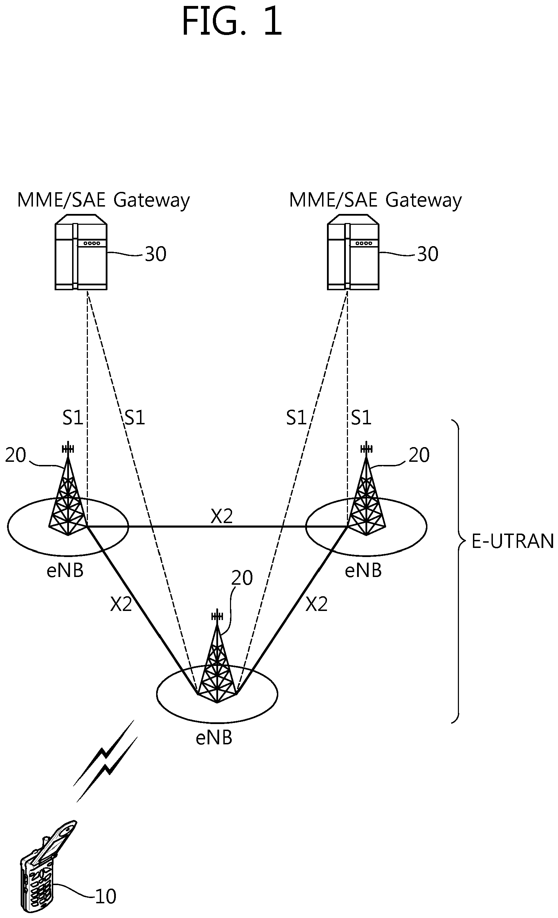

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) and a system architecture evolution (SAE) gateway (S-GW). The MME/S-GW 30 may be positioned at the end of the network and connected to an external network. For clarity, MME/S-GW 30 will be referred to herein simply as a "gateway," but it is understood that this entity includes both the MME and S-GW.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. A plurality of nodes may be connected between the eNB 20 and the gateway 30 via an S1 interface.

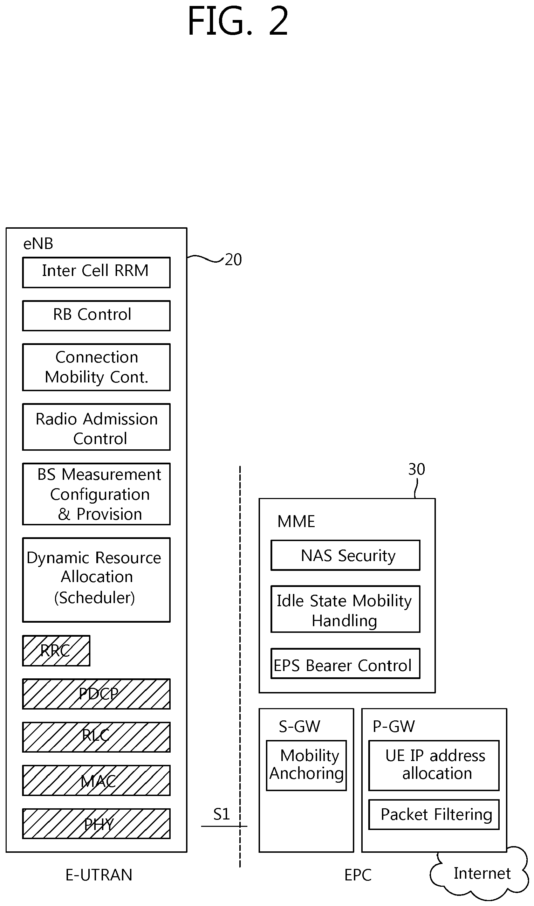

FIG. 2 shows a block diagram of architecture of a typical E-UTRAN and a typical EPC. Referring to FIG. 2, the eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

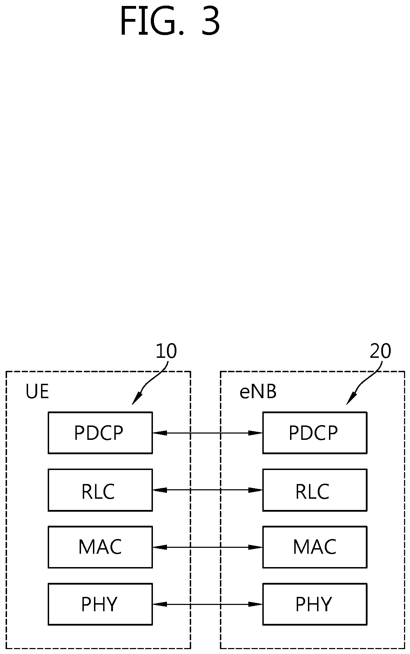

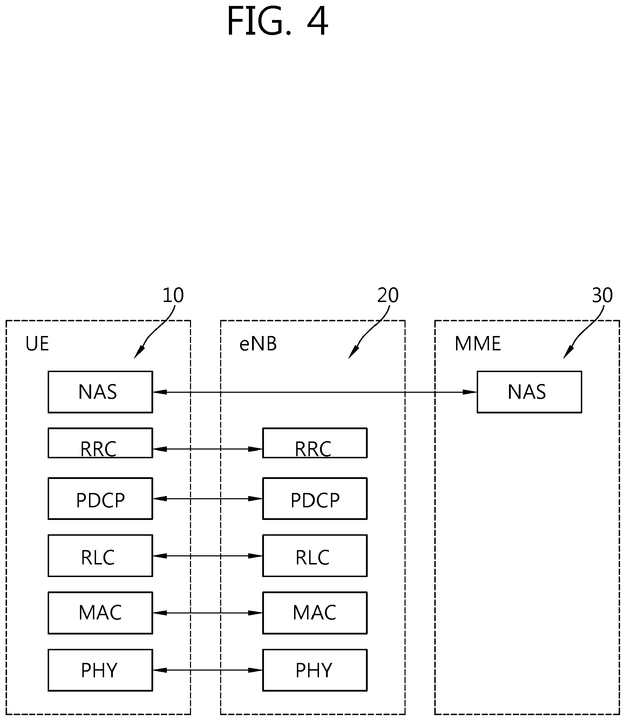

FIG. 3 shows a block diagram of a user plane protocol stack of an LTE system. FIG. 4 shows a block diagram of a control plane protocol stack of an LTE system. Layers of a radio interface protocol between the UE and the E-UTRAN may be classified into a first layer (L1), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e., between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or IPv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 3, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 4, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

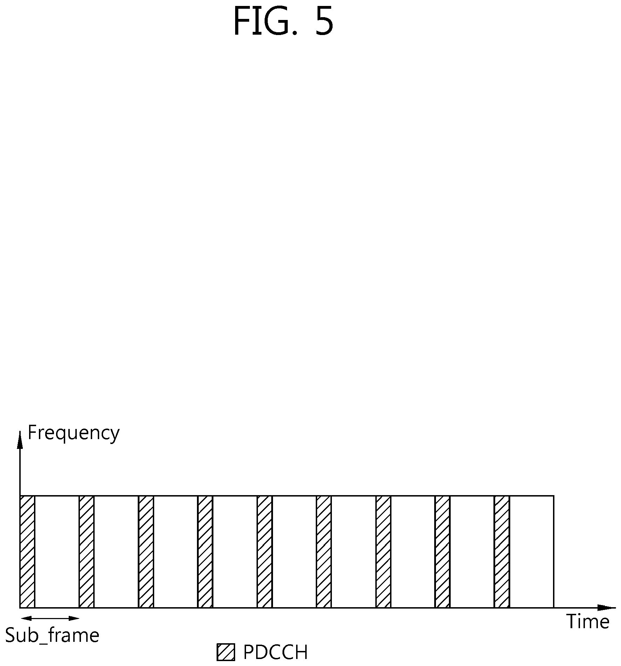

FIG. 5 shows an example of a physical channel structure. A physical channel transfers signaling and data between PHY layer of the UE and eNB with a radio resource. A physical channel consists of a plurality of subframes in time domain and a plurality of subcarriers in frequency domain. One subframe, which is 1 ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, a uplink shared channel (UL-SCH) for transmitting user traffic or control signals, etc. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRC_CONNECTED). In RRC_IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC_CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

Overall architecture and network interface for dual connectivity (DC) is described. It may be referred to 3GPP TR 36.842 V12.0.0 (2013-12). The E-UTRAN may supports dual connectivity operation whereby a multiple RX/TX UE in RRC_CONNECTED is configured to utilize radio resources provided by two distinct schedulers, located in two eNBs connected via a non-ideal backhaul over the X2 interface. The overall E-UTRAN architecture described in FIG. 1 is applicable for dual connectivity as well. Two different roles may be assumed to eNBs involved in dual connectivity for a certain UE: an eNB may either act as a master eNB (MeNB) or as a secondary eNB (SeNB). The MeNB is the eNB which terminates at least S1-MME in dual connectivity. The SeNB is the eNB that is providing additional radio resources for the UE but is not the MeNB in dual connectivity. In dual connectivity a UE is connected to one MeNB and one SeNB.

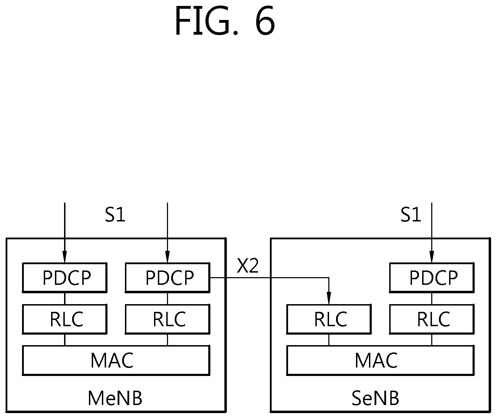

FIG. 6 shows radio protocol architecture for dual connectivity. In DC, the radio protocol architecture that a particular bearer uses depends on how the bearer is setup. Three alternatives exist, master cell group (MCG) bearer, secondary cell group (SCG) bearer and split bearer. Referring to FIG. 6, those three alternatives are depicted, i.e. in order of the MCG bearer, split bearer and SCG bearer from left to right. The MCG bearer is a bearer whose radio protocols are only located in the MeNB to use MeNB resources only in dual connectivity. The SCG bearer is a bearer whose radio protocols are only located in the SeNB to use SeNB resources in dual connectivity. The split bearer is a bearer whose radio protocols are located in both the MeNB and the SeNB to use both MeNB and SeNB resources in dual connectivity. Signaling radio bearers (SRBs) are always of the MCG bearer and therefore only use the radio resources provided by the MeNB. The MCG is a group of serving cells associated with the MeNB, comprising of the primary cell (PCell) and optionally one or more secondary cells (SCells) in dual connectivity. The SCG is a group of serving cells associated with the SeNB, comprising of primary SCell (PSCell) and optionally one or more SCells in dual connectivity. DC may also be described as having at least one bearer configured to use radio resources provided by the SeNB.

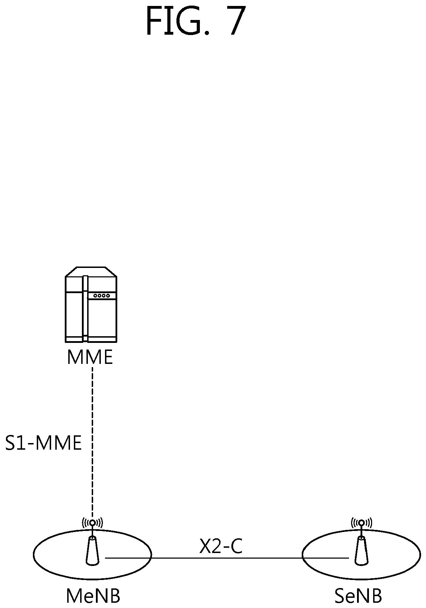

FIG. 7 shows C-plane connectivity of eNBs involved in dual connectivity for a certain UE. Inter-eNB control plane signaling for dual connectivity is performed by means of X2 interface signaling. Control plane signaling towards the MME is performed by means of S 1 interface signaling. There is only one S1-MME connection per UE between the MeNB and the MME. Each eNB should be able to handle UEs independently, i.e. provide the PCell to some UEs while providing SCell(s) for SCG to others. Each eNB involved in dual connectivity for a certain UE owns its radio resources and is primarily responsible for allocating radio resources of its cells, respective coordination between MeNB and SeNB is performed by means of X2 interface signaling. Referring to FIG. 7, the MeNB is C-plane connected to the MME via S1-MME, the MeNB and the SeNB are interconnected via X2-C.

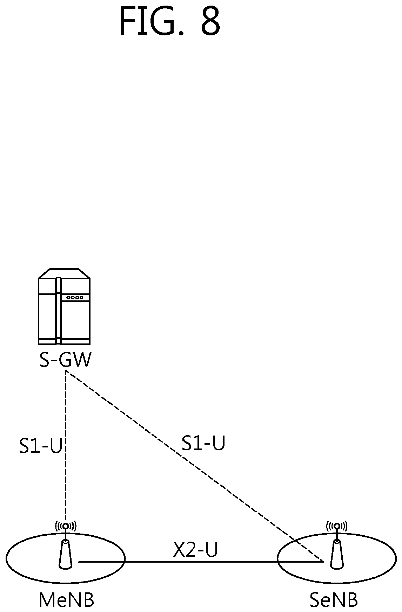

FIG. 8 shows U-plane connectivity of eNBs involved in dual connectivity for a certain UE. U-plane connectivity depends on the bearer option configured. For MCG bearers, the MeNB is U-plane connected to the S-GW via S1-U, the SeNB is not involved in the transport of user plane data. For split bearers, the MeNB is U-plane connected to the S-GW via S1-U and in addition, the MeNB and the SeNB are interconnected via X2-U. For SCG bearers, the SeNB is directly connected with the S-GW via S1-U. If only MCG and split bearers are configured, there is no S1-U termination in the SeNB.

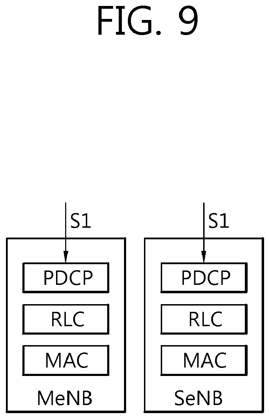

FIG. 9 shows an example of U-plane architecture for dual connectivity. U-plane architecture for dual connectivity shown in FIG. 9 is the combination of S1-U that terminates in SeNB and independent PDCPs (no bearer split).

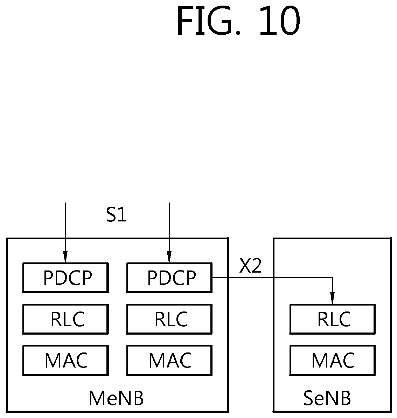

FIG. 10 shows another example of U-plane architecture for dual connectivity. U-plane architecture for dual connectivity shown in FIG. 10 is the combination of S1-U that terminates in MeNB, bearer split in MeNB, and independent RLCs for split bearers.

The corresponding UE architecture may be also changed to support the new feature.

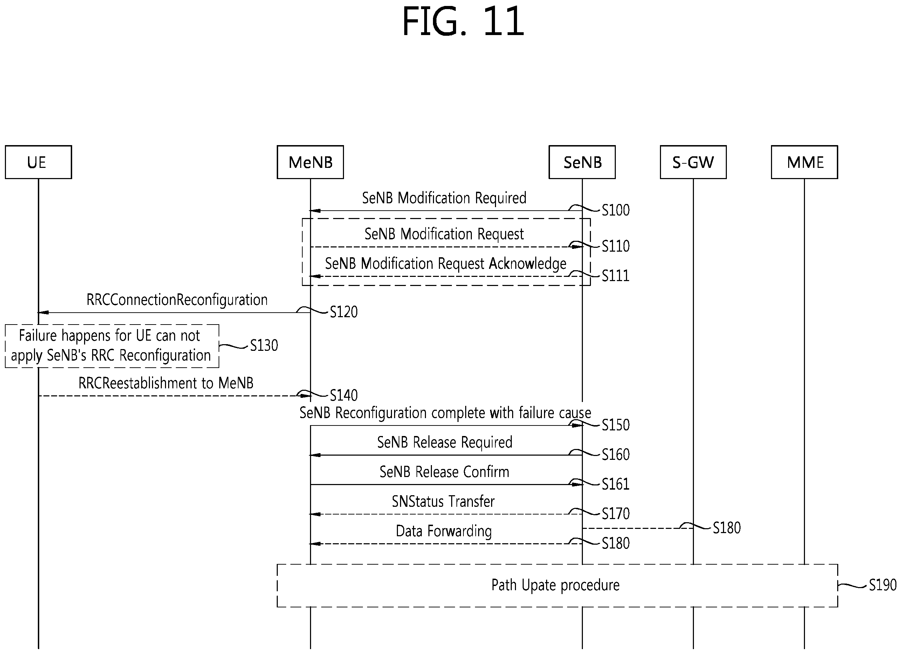

FIG. 11 shows an example of a conventional SeNB modification procedure. The SeNB modification procedure may consist of MeNB initiated SeNB modification procedure and SeNB initiated SeNB modification procedure. The MeNB initiated SeNB modification procedure is used to enable an MeNB to request an SeNB to modify the UE context at the SeNB. The SeNB initiated SeNB modification procedure is used by the SeNB to modify the UE context in the SeNB.

For the SeNB initiated SeNB modification procedure, in step S100, the SeNB may transmit the SeNB Modification Required message to the MeNB. Alternatively, for the MeNB initiated SeNB modification procedure, in step S110, the MeNB may transmit the SeNB Modification Request message to the SeNB. As a response to the SeNB Modification Request message, in step S111, the SeNB may transmit the SeNB Modification Request Acknowledge message to the MeNB. The RRC context of the SeNB may be included in the message from the SeNB to the MeNB, i.e. the SeNB Modification Required message in step S100 or the SeNB Modification Request Acknowledge message in step S111.

In step S120, the MeNB transmits the *RRCConnectionReconfiguration* message to the UE with RRC context of the MeNB and SeNB together. More specifically, if the received *RRCConnectionReconfiguration* includes the *scg-Configuration,* or if the current UE configuration includes one or more split DRBs and the received *RRCConnectionReconfiguration* includes *radioResourceConfigDedicated* including *drab-ToAddModList,* the UE performs SCG reconfiguration. The *scg-Configuration* may include the RRC context of the MeNB and SeNB.

However, upon receiving the *RRCConnectionReconfiguration* message with RRC context of the MeNB and SeNB, in step S130, failure may happen due to wrong RRC reconfiguration of the SeNB. That is, the UE cannot apply RRC reconfiguration of the SeNB. In this situation, a scheme about how to notify the reason of failure to the SeNB exists. More specifically, if the UE is unable to comply with (part of) the configuration included in the *RRCConnectionReconfiguration* message, the UE continues using the configuration used prior to the reception of *RRCConnectionReconfiguration* message, and in step S140, initiates the connection re-establishment procedure upon which the connection reconfiguration procedure ends.

In step S150, the MeNB transmits the SeNB Reconfiguration Complete message to the SeNB with a failure cause. The purpose of the SeNB reconfiguration completion procedure is to provide information to the SeNB whether the requested configuration was successfully applied by the UE. Based on the received SeNB Reconfiguration Complete message with the failure cause, in step S160, the SeNB initiates the SeNB initiated SeNB release procedure by transmitting the SeNB Release Required message to the MeNB. The SeNB initiated SeNB release procedure is triggered by the SeNB to initiate the release of the resources for a specific UE. In step S161, the MeNB transmits the SeNB Release Confirm message to the SeNB.

In step S170, the SeNB transmits a sequence number (SN) Status Transfer message to the MeNB. In step S180, the data forwarding may start. In step S190, path update procedure to the MME may be performed.

As described above, failure may happen due to wrong RRC reconfiguration of the SeNB. During the SeNB modification procedure as described above, the SeNB cannot be modified, or during the SeNB addition procedure which is not disclosed above, the SeNB cannot be added. When failure happens, the failure cause may be forwarded from the UE to the SeNB via the MeNB, since the SeNB does not have RRC, as shown above in FIG. 10 or 11.

However, according to the prior art, signaling waste may occur. More specifically, upon performing the RRC connection re-establishment procedure in step S140 of FIG. 11, the MeNB may make a decision to release the whole SCG bearers. Thus, it may be not necessary for the MeNB to wait to receive the SeNB Release Required message from the SeNB, like step S160 of FIG. 11.

In order to solve the problem described above, a method for transmitting a SeNB Release Request message according to an embodiment of the present invention is described.

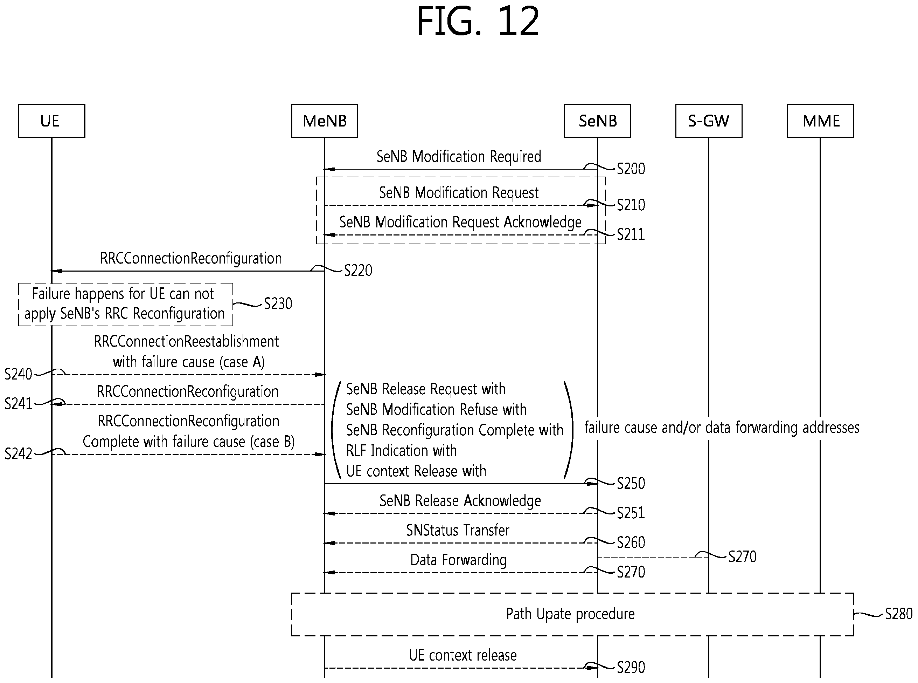

FIG. 12 shows an example of a SeNB modification procedure according to an embodiment of the present invention.

Step S200, S210, S211, S220 and S230 of FIG. 12 are the same as step S100, S110, S111, S120 and S130 of FIG. 11.

When failure happens due to wrong RRC reconfiguration of the SeNB, in step S240, the UE may transmit the *RRCConnectionReestablishmentRequest* message to the MeNB with a cause value, which indicates that the UE has not successfully applied the SCG configuration. The cause value may correspond to the *reestablishmentCause* field in the *RRCConnectionReestablishmentRequest* message, which indicates the failure cause that triggered the re-establishment procedure. Alternatively, upon receiving the *RRCConnectionReconfiguration* message from the MeNB in step S241, the UE may transmit the *RRCConnectionReconfigurationComplete* message including the cause value for notifying the same reason to the MeNB in step S242.

Upon receiving the cause value from the UE, the MeNB checks and decides to release all of the SeNB bearers. In this case, in step S250, the MeNB may transmit one of following messages to notify that the UE has not successfully applied the SCG configuration to the SeNB.
(1) The MeNB may transmit the SeNB Release Request message directly to the SeNB for releasing all of the SCG bearers or split bearers. The SeNB Release Request message may include a cause value, which indicates that the UE has not successfully applied the SCG configuration. The SeNB Release Request message may further include data forwarding addresses (E-UTRAN radio access bearer identifier (E-RAB ID) and DL/UL forwarding GPRS tunneling protocol (GTP) tunnel endpoint) for SCG bearer option or split bearer option for taking back all of the bearers. The date forwarding addresses may also be contained in the new message or the SeNB Modification Request message in step S210 if applicable.

Table 1 shows an example of the SeNB Release Request message according to an embodiment of the present invention. This message is sent by the MeNB to the SeNB to request the release of resources.

**<Table 1>**

| **IE/Group Name** | **Presen ce** | **Range** | **IE type and reference** | **Semantics description** | **Crit icali ty** | **Assigned Criticalit y** |
|---|---|---|---|---|---|---|
| Message Type | M | | 9.2.13 | | YES | ignore |
| MeNB UE X2AP ID | M | | eNB UE X2AP ID 9.2.24 | Allocated at the MeNB | YES | reject |
| SeNB UE X2AP ID | O | | eNB UE X2AP ID 9.2.24 | Allocated at the SeNB | YES | reject |
| **Cause** | O | | 9.2.6 | | YES | ignore |
| E-RABs To Be Released List | | *0..1* | | | YES | ignore |
| > E-RABs To Be Released Item | | *1*.. *<maxnoof Bearers>* | | | EAC H | ignore |
| >>CHOICE *Bearer Option* | M | | | | | |
| >>>*SCG Bearer* | | | | | | |
| >>>>E-RAB ID | M | | 9.2.23 | | - | - |
| >>>>UL Forwarding GTP Tunnel Endpoint | O | | GTP Tunnel Endpoint 9.2.1 | Identifies the X2 transport bearer used for forwarding of UL PDUs | - | - |
| >>>>DL Forwarding GTP Tunnel | O | | GTP Tunnel Endpoint | Identifies the X2 transport bearer. used | - | - |
| Endpoint | | | 9.2.1 | for forwarding of DL PDUs | | |
| >>>*Split Bearer* | | | | | | |
| >>>>E-RAB ID | M | | 9.2.23 | | - | - |
| >>>>DL Forwarding GTP Tunnel Endpoint | O | | GTP Tunnel Endpoint 9.2.1 | Identifies the X2 transport bearer. used for forwarding of DL PDUs | - | - |

Referring to Table 1, the SeNB Release Request message includes the Cause information element (IE) which corresponds to the cause value described above, according to an embodiment of the present invention.

Table 2 shows an example of the Cause IE according to an embodiment of the present invention. The purpose of the Cause IE is to indicate the reason for a particular event for the whole protocol.

**<Table 2>**

| **IE/Group Name** | **Prese nce** | **Ran ge** | **IE Type and Reference** | **Semantics Description** |
|---|---|---|---|---|
| CHOICE *Cause Group* | M | | | |
| >*Radio Network Layer* | | | | |
| >>Radio Network Layer Cause | M | | ENUMERATED (Handover Desirable for Radio Reasons, Time Critical Handover, Resource Optimisation Handover, Reduce Load in Serving Cell, Partial Handover, Unknown New eNB UE X2AP ID, Unknown Old eNB UE X2AP ID, Unknown Pair of UE X2AP ID, HO Target not Allowed, TX2_{RELOCoverall} Expiry, T_{RELOCprep} Expiry, Cell not Available, No Radio Resources Available in Target Cell, Invalid MME Group ID, Unknown MME Code, Encryption And/Or Integrity Protection Algorithms Not Supported, ReportCharacteristicsEmpty, NoReportPeriodicity, | |
| | | | ExistingMeasurementID, Unknown eNB Measurement ID, Measurement Temporarily not Available, Unspecified,...,Load Balancing, Handover Optimisation, Value out of allowed range, Multiple E-RAB ID instances, Switch Off Ongoing, Not supported QCI value, Measurement not supported for the object, T_{DCoverall} Expiry, T_{DCprep} Expiry, Action Desirable for Radio Reasons, Reduce Load, Resource Optimisation, Time Critical action, Target not Allowed, No Radio Resources Available, Invalid QoS combination, Encryption Algorithms Not Supported, Procedure cancelled, RRM purpose, Improve user bit rate, User Inactivity, Radio Connection With UE Lost, Failure in the Radio Interface Procedure) | |
| >*Transport Layer* | | | | |
| >>Transport Layer Cause | M | | ENUMERATED (Transport Resource Unavailable, Unspecified,...) | |
| >*Protocol* | | | | |
| >>Protocol Cause | M | | ENUMERATED (Transfer Syntax Error,Abstract Syntax Error (Reject),Abstract Syntax Error (Ignore and Notify),Message not Compatible with Receiver State,Semantic Error,Unspecified,Abstract Syntax Error (Falsely Constructed Message),...) | |
| >*Misc* | | | | |
| >>Miscellaneous Cause | M | | ENUMERATED (Control Processing Overload, Hardware Failure, O&M Intervention,Not enough User Plane Processing | |
| | | | Resources,Unspecified,...) | |

Referring to Table 2, the Cause IE includes the cause "Radio Connection With UE Lost" and/or "Failure in the Radio Interface Procedure", which may indicate that the UE has not successfully applied the SCG configuration, according to an embodiment of the present invention.
(2) The MeNB may transmit the SeNB Modification Refuse Message to the SeNB with the cause value and/or data forwarding addresses. Or, the MeNB may transmit the SeNB Modification Refuse Message to the SeNB without the cause value and/or data forwarding addresses, followed by the SeNB Release Request message which includes the cause value and/or data forwarding addresses as described above in (1).
(3) The MeNB may transmit the SeNB Reconfiguration Complete message to the SeNB with the cause value and/or data forwarding addresses. Or, the MeNB may transmit the SeNB Reconfiguration Complete message to SeNB without the cause value and/or data forwarding addresses, followed by the SeNB Release Request message which includes the cause value and/or data forwarding addresses as described above in (1).
(4) The MeNB may transmit the Radio Link Failure (RLF) Indication message to the SeNB with the cause value and/or data forwarding addresses. Or, the MeNB may transmit the Radio Link Failure Indication message to the SeNB without the cause value and/or data forwarding addresses, followed by the SeNB Release Request message which includes the cause value and/or data forwarding addresses as described above in (1).
(5) The MeNB may transmit the UE Context Release message to the SeNB with the cause value and/or data forwarding addresses. Or, the MeNB may transmit the UE Context Release message to the SeNB without the cause value and/or data forwarding addresses, followed by the SeNB Release Request message, which includes the cause value and/or data forwarding addresses as described above in (1). If the UE Context Release message is not used here, the UE Context Release message may be transmitted after step S280 described below, for context release of the SeNB.
(6) The MeNB may transmit the message described above (such as the SeNB Modification Refuse message) to the SeNB with the cause value and/or data forwarding addresses, followed by the UE Context Release message with/without data forwarding addresses.

For the split bearer option, in step S251, the SeNB may transmit the SeNB Release Acknowledge message to the MeNB with the information about the protocol data unit (PDU) delivery status from the RLC layer at the SeNB.

For the SCG bearer option, in step S260, the SeNB may transmit the SN Status Transfer message to the MeNB, in step S270, data forwarding from the SeNB may be performed. Further for SCG bearer option, in step S280, the path update procedure to the MME may be performed. In step S290, the MeNB may transmit the UE Context Release message to the SeNB.

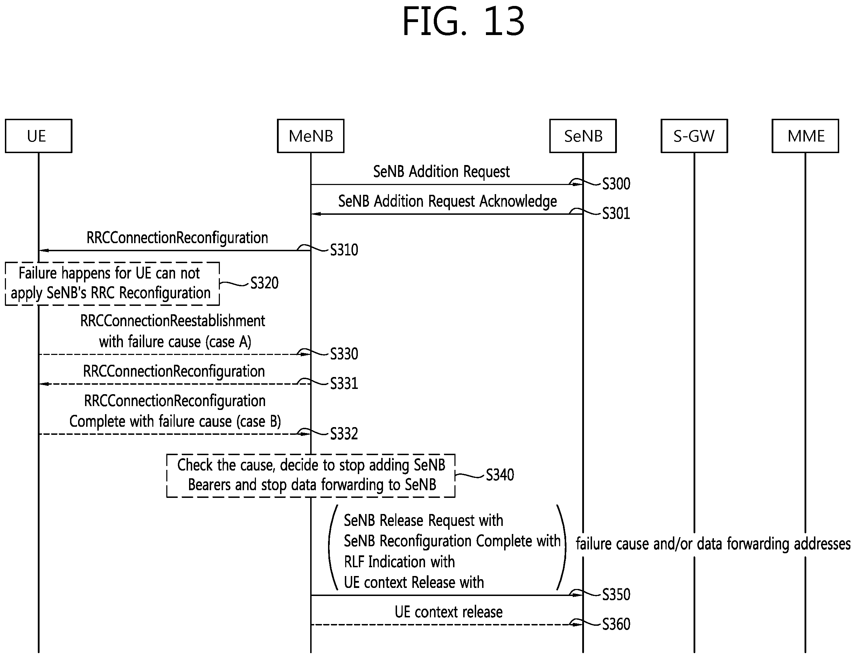

FIG. 13 shows an example of a SeNB addition procedure according to an embodiment of the present invention.

In step S300, the MeNB transmits the SeNB Addition Request message to the SeNB. As a response to the SeNB Addition Request message, in step S301, the SeNB transmits the SeNB Addition Request Acknowledge message to the MeNB.

In step S310, the MeNB transmits the *RRCConnectionReconfiguration* message to the UE with RRC context of the MeNB and SeNB. However, in step S320, failure may happen due to wrong RRC reconfiguration of the SeNB. That is, the UE cannot apply RRC reconfiguration of the SeNB.

When failure happens due to wrong RRC reconfiguration of the SeNB, in step S330, the UE may transmit the *RRCConnectionReestablishmentRequest* message to the MeNB with a cause value, which indicates that the UE has not successfully applied the SCG configuration. The cause value may correspond to the *reestablishmentCause* field in the *RRCConnectionReestablishmentRequest* message, which indicates the failure cause that triggered the re-establishment procedure. Alternatively, upon receiving the *RRCConnectionReconfiguration* message from the MeNB in step S331, the UE may transmit the *RRCConnectionReconfigurationComplete* message including the cause value for notifying the same reason to the MeNB in step S332.

Upon receiving the cause value from the UE, in step S340, the MeNB checks the failure cause, and decides to stop adding the SeNB bearers and thus stop the data forwarding to the SeNB. In this case, in step S350, the MeNB may transmit one of following messages to notify that the UE has not successfully applied the SCG configuration to the SeNB.
(1) The MeNB may transmit the SeNB Release Request message directly to the SeNB with the cause value indicating that the UE has not successfully applied the SCG configuration to the SeNB. The SeNB Release Request message may follow Table 1 and Table 2 described above.
(2) The MeNB may transmit the SeNB Reconfiguration Complete message to the SeNB with the cause value indicating that the UE has not successfully applied the SCG configuration to the SeNB.
(3) The MeNB may transmit the Radio Link Failure Indication message to the SeNB with the cause value indicating that the UE has not successfully applied the SCG configuration to the SeNB.
(4) The MeNB may transmit the UE Context Release message to the SeNB with the cause value indicating that the UE has not successfully applied the SCG configuration to the SeNB.
(5) The MeNB may transmit the message described above (such as SeNB Release Request message, SeNB Reconfiguration Complete message, the Radio Link Failure Indication message) to the SeNB with the cause value, followed by the UE Context Release message separately.

In step S360, the MeNB may transmit the UE Context Release message to the SeNB.

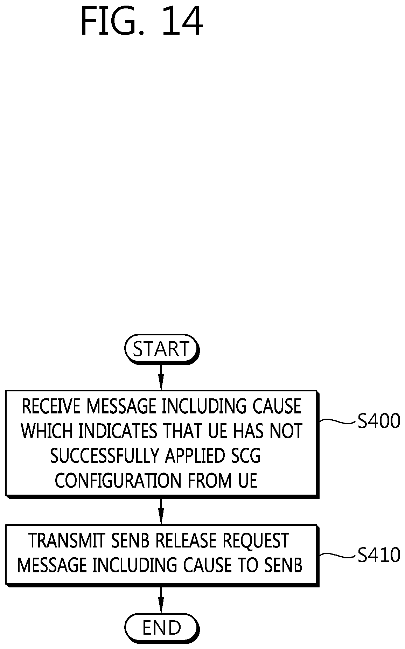

FIG. 14 shows an example of a method for transmitting a SeNB Release Request message according to an embodiment of the present invention.

In step S400, the MeNB receives a message including a cause, which indicates that a UE has not successfully applied a SCG configuration, from the UE. The message may be one of a RRC connection reestablishment request message or a RRC connection reconfiguration complete message.

Upon receiving the message, the MeNB may decide to release all of SCG bearers. In step S410, the MeNB transmits the SeNB Release Request message including the cause to a SeNB, in order to initiates the SeNB Release Request procedure. The MeNB may provide appropriate information within the Cause IE. The cause may be included in the SeNB Release Request message via the Cause IE, and the cause may be one of "Radio Connection With UE Lost" or "Failure in the Radio Interface Procedure", as described above in Table 1 and Table 2. The SeNB Release Request message may include a data forwarding address for SCG bearer option. The data forwarding address may include E-RAB ID and/or DL/UL forwarding GTP tunnel endpoint. The SeNB Release Request message may indicate releasing all of SCG bearers.

Upon reception of the SeNB Release Request message, the SeNB may stop providing user data to the UE. The MeNB may further receive a SeNB Release Request Acknowledge message with information on a (PDU delivery status from the SeNB. The MeNB may further receive a SN Status Transfer message from the SeNB. The MeNB may further receive data forwarded from the SeNB. The MeNB may further perform a path update procedure to a MME. The MeNB may further transmit a UE Context Release message to the SeNB.

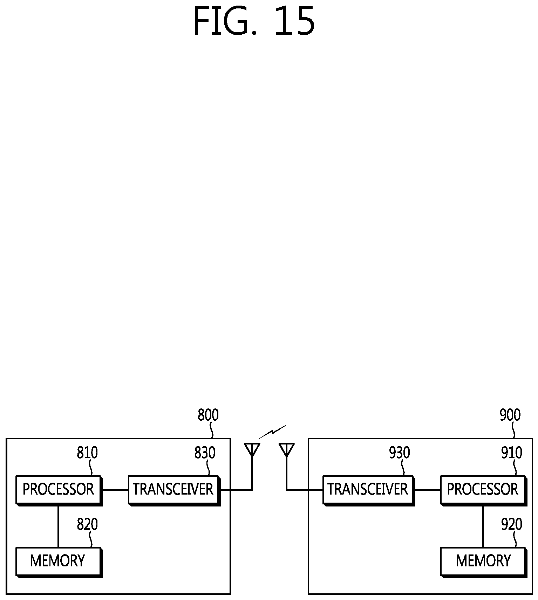

FIG. 15 shows a wireless communication system to implement an embodiment of the present invention.

A MeNB 800 includes a processor 810, a memory 820, and a transceiver 830. The processor 810 may be configured to implement proposed functions, procedures, and/or methods in this description. Layers of the radio interface protocol may be implemented in the processor 810. The memory 820 is operatively coupled with the processor 810 and stores a variety of information to operate the processor 810. The transceiver 830 is operatively coupled with the processor 810, and transmits and/or receives a radio signal.

A SeNB or UE 900 includes a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein.

## Claims

1. A method for transmitting, by a master evolved NodeB, MeNB, a secondary eNB, SeNB, release request message in a wireless communication system, the method comprising:
transmitting (S220) a radio resource control, RRC, connection reconfiguration message including a secondary cell group, SCG, configuration for SeNB addition or SeNB modification to a user equipment, UE;
receiving (S240) a RRC connection reestablishment request message including a cause, which indicates that the UE has not successfully applied the SCG configuration, from the UE; and
transmitting (S250) the SeNB Release Request message including the cause, which indicates that the UE has not successfully applied the SCG configuration, to a SeNB.

2. The method of claim 1, wherein the cause is included in the SeNB Release Request message via a cause information element, IE.

3. The method of claim 2, wherein the cause is one of "Radio Connection With UE Lost" or "Failure in the Radio Interface Procedure".

4. The method of claim 1, wherein the SeNB Release Request message includes a data forwarding address for SCG bearer option or split bearer option.

5. The method of claim 4, wherein the data forwarding address includes E-UTRAN radio access bearer identifier, E-RAB ID.

6. The method of claim 4, wherein the data forwarding address includes downlink/uplink, DL/UL, forwarding GPRS tunneling protocol, GTP, tunnel endpoint.

7. The method of claim 1, wherein the SeNB Release Request message indicates releasing all of SCG bearers or split bearers.

8. The method of claim 1, further comprising deciding to release all of SCG bearers or split bearers.

9. The method of claim 1, further comprising receiving a SeNB Release Request Acknowledge message with information on a protocol data unit, PDU, delivery status from the SeNB.

10. The method of claim 1, further comprising receiving a sequence number, SN, Status Transfer message from the SeNB.

11. The method of claim 1, further comprising receiving data forwarded from the SeNB.

12. The method of claim 1, further comprising performing a path update procedure to a mobility management entity, MME.

13. A master evolved NodeB, MeNB, comprising:
a memory;
a transceiver; and
a processor coupled to the memory and the transceiver, and configured to:
control (S220) the transceiver to transmit a radio resource control, RRC, connection reconfiguration message including a secondary cell group, SCG, configuration for SeNB addition or SeNB modification to a user equipment, UE,
control the transceiver to receive (S240) a RRC connection reestablishment request message including a cause, which indicates that the UE has not successfully applied the SCG configuration, from the UE; and
control the transceiver to transmit (S250) a secondary eNB (SeNB) Release Request message including the cause, which indicates that the UE has not successfully applied the SCG configuration, to a SeNB.

## Patentansprüche

1. Verfahren zur Übertragung, durch eine Master-evolved-NodeB, MeNB, einer sekundäre eNB, SeNB, - Freigabeanforderungsnachricht in einem drahtlosen Kommunikationssystem, wobei das Verfahren umfasst:
Übertragen (S220), an ein Benutzergerät (UE), einer radio resource control, RRC, -Verbindungsrekonfigurierungsnachricht einschließlich einer secondary cell group, SCG, -Konfiguration für die SeNB-Hinzufügung oder SeNB-Modifizierung;
Empfangen (S240), von dem UE, einer RRC-Verbindungswiederherstellungsanforderungsnachricht einschließlich einer Ursache, die angibt, dass das UE die SCG-Konfiguration nicht erfolgreich angewandt hat; und
Übertragen (S250), an eine SeNB, der SeNB-Freigabeanforderungsnachricht einschließlich der Ursache, die angibt, dass das UE die SCG-Konfiguration nicht erfolgreich angewandt hat.

2. Verfahren nach Anspruch 1, wobei die Ursache über ein Ursacheninformationselement, IE, in der SeNB-Freigabeanforderungsnachricht eingeschlossen ist.

3. Verfahren nach Anspruch 2, wobei die Ursache "Funkverbindung mit UE verloren gegangen" oder "Fehler in der Funkschnittstellenprozedur" ist.

4. Verfahren nach Anspruch 1, wobei die SeNB-Freigabeanforderungsnachricht eine Datenweiterleitungsadresse für die SCG-Bearer-Option oder Split-Bearer-Option einschließt.

5. Verfahren nach Anspruch 4, wobei die Datenweiterleitungsadresse einen E-UTRAN-Funkzugang-Bearer-Bezeichner, E-RAB-ID, einschließt.

6. Verfahren nach Anspruch 4, wobei die Datenweiterleitungsadresse einen Downlink/Uplink, DL/UL,-Weiterleitung- GPRS Tunneling Protocol, GTP, -Tunnelendpunkt einschließt.

7. Verfahren nach Anspruch 1, wobei die SeNB-Freigabeanforderungsnachricht die Freigabe aller SCG-Bearer oder Split-Bearer angibt.

8. Verfahren nach Anspruch 1, ferner umfassend die Entscheidung, alle SCG-Bearer oder Split-Bearer freizugeben.

9. Verfahren nach Anspruch 1, ferner umfassend das Empfangen einer SeNB-Freigabeanforderungsquittiernachricht mit Informationen über einen Protokolldateneinheit, PDU,-Zustellungsstatus von der SeNB.

10. Verfahren nach Anspruch 1, ferner umfassend das Empfangen einer Sequence Number, SN, -Statustransfernachricht von der SeNB.

11. Verfahren nach Anspruch 1, ferner umfassend das Empfangen von aus der SeNB weitergeleiteten Daten.

12. Verfahren nach Anspruch 1, ferner umfassend das Durchführen einer Wegaktualisierungsprozedur zu einer Mobility-Management-Entity, MME.

13. Master-evolved-NodeB, MeNB, umfassend:
einen Speicher;
einen Transceiver; und
einen Prozessor, der an den Speicher und den Transceiver gekoppelt ist und so konfiguriert ist, dass er:
den Transceiver so steuert (S220), dass dieser eine radio resource control, RRC, -Verbindungsrekonfigurierungsnachricht einschließlich einer secondary cell group, SCG, -Konfiguration für die SeNB-Hinzufügung oder SeNB-Modifizierung an ein Benutzergerät (UE) überträgt,
den Transceiver so steuert, dass dieser eine RRC-Verbindungswiederherstellungsanforderungsnachricht einschließlich einer Ursache, die angibt, dass das UE die SCG-Konfiguration nicht erfolgreich angewandt hat, von dem UE empfängt (S240); und
den Transceiver so steuert, dass dieser eine sekundäre eNB, SeNB, -Freigabeanforderungsnachricht einschließlich der Ursache, die angibt, dass das UE die SCG-Konfiguration nicht erfolgreich angewandt hat, an eine SeNB überträgt (S250).

## Revendications

1. Procédé pour transmettre, par un NodeB évolué maître, MeNB, un message de demande de libération d'eNB secondaire, SeNB, dans un système de communication sans fil, le procédé comprenant :
la transmission (S220) d'un message de reconfiguration de connexion de commande de ressources radio, RRC, incluant une configuration de groupe de cellules secondaires, SCG, pour addition de SeNB ou modification de SeNB à un équipement utilisateur, UE ;
la réception (S240) d'un message de demande de ré-établissement de connexion RRC incluant une cause, qui indique que l'UE n'a pas appliqué avec succès la configuration de SCG, à partir de l'UE ; et
la transmission (S250) du message de demande de libération de SeNB incluant la cause, qui indique que l'UE n'a pas appliqué avec succès la configuration de SCG, à un SeNB.

2. Procédé selon la revendication 1, dans lequel la cause est incluse dans le message de demande de libération de SeNB par l'intermédiaire d'un élément d'informations, IE, de cause.

3. Procédé selon la revendication 2, dans lequel la cause est l'une parmi « Connexion Radio Avec UE Perdue » ou « Défaillance dans la Procédure d'Interface Radio ».

4. Procédé selon la revendication 1, dans lequel le message de demande de libération de SeNB inclut une adresse de réacheminement de données pour option porteuse de SCG ou option porteuse divisée.

5. Procédé selon la revendication 4, dans lequel l'adresse de réacheminement de données inclut un identifiant de porteuse à accès radio E-UTRAN, E-RAB ID.

6. Procédé selon la revendication 4, dans lequel l'adresse de réacheminement de données inclut un point d'extrémité de tunnel à protocole de tunnellisation GPRS, GTP, de réacheminement à liaison descendante/liaison montante, DL/UL.

7. Procédé selon la revendication 1, dans lequel le message de demande de libération de SeNB indique la libération de la totalité des porteuses de SCG ou des porteuses divisées.

8. Procédé selon la revendication 1, comprenant en outre la décision de libérer la totalité des porteuses de SCG ou des porteuses divisées.

9. Procédé selon la revendication 1, comprenant en outre la réception d'un message d'accusé de réception de demande de libération de SeNB avec des informations concernant un état de remise d'unité de données de protocole, PDU à partir du SeNB.

10. Procédé selon la revendication 1, comprenant en outre la réception d'un message de transfert d'état de numéro de séquence, SN, à partir du SeNB.

11. Procédé selon la revendication 1, comprenant en outre la réception de données réacheminées à partir du SeNB.

12. Procédé selon la revendication 1, comprenant en outre la réalisation d'une procédure d'actualisation de chemin à une entité de gestion de mobilité, MME.

13. NodeB évolué maître, MeNB, comprenant :
une mémoire ;
un émetteur-récepteur ; et
un processeur couplé à la mémoire et l'émetteur-récepteur, et configuré pour :
commander (S220) l'émetteur-récepteur pour transmettre un message de reconfiguration de connexion de commande de ressources radio, RRC, incluant une configuration de groupe de cellules secondaires, SCG, pour addition de SeNB ou modification de SeNB à un équipement utilisateur, UE,
commander l'émetteur-récepteur pour recevoir (S240) un message de demande de ré-établissement de connexion RRC incluant une cause, qui indique que l'UE n'a pas appliqué avec succès la configuration de SCG, à partir de l'UE ; et
commander l'émetteur-récepteur pour transmettre (S250) un message de demande de libération d'eNB secondaire (SeNB) incluant la cause, qui indique que l'UE n'a pas appliqué avec succès la configuration de SCG, à un SeNB.
